# EUROPEAN PATENT APPLICATION

(11) **EP 4 773 561 A1**
(43) Date of publication of application: **08.07.2026**
(21) Application number: 24869948.0
(22) Date of filing: 03.07.2024
(51) Int. Cl.: H04L 27/26

(54) **DATA TRANSMISSION METHOD, AND DEVICE AND STORAGE MEDIUM**

(30) Priority: 27.09.2023 CN 202311270737
(71) Applicant: ZTE Corporation, Shenzhen, Guangdong 518057 (CN)
(72) Inventor: HUA, Jian, Shenzhen, Guangdong 518057 (CN); XIN, Yu, Shenzhen, Guangdong 518057 (CN); BAO, Tong, Shenzhen, Guangdong 518057 (CN)
(74) Representative: Aipex B.V.
(86) International application number: PCT/CN2024/103250
(87) International publication number: WO 2025/066391

(57) **Abstract**

Provided are a data transmission method, a device, and a storage medium. The method includes: dividing to-be-transmitted data into N groups of first sequences, where an n-th group of first sequences of the N groups of first sequences includes k(n) pieces of data, and k(n) is a positive integer; multiplying, for each n from 1 to N, the n-th group of first sequences of the N groups of first sequences by a corresponding coefficient group X(n) to obtain N groups of second sequences, where N is an integer greater than or equal to 2; performing inverse Fourier transform on each group of the N groups of second sequences to obtain N groups of third sequences; performing the inverse Fourier transform on the N groups of third sequences to form a group of target time domain data sequences; and transmitting the target time domain data sequences on preconfigured time-frequency resources.

## Description

### TECHNICAL FIELD

The present application relates to the field of communication technology and, in particular, to a data transmission method, a device, and a storage medium.

### BACKGROUND

In 5G communication technology, cyclic prefix-orthogonal frequency division multiplexing (CP-OFDM) serves as the basic waveform, and different numerologies may be adopted between two adjacent subbands, which damages the orthogonality between subcarriers and introduces new interference. To solve the interference problem, a relatively straightforward method is to insert a guard band between two transmission bands with different numerologies, causing a waste of frequency resources. How to design a unified waveform architecture to flexibly integrate multiple waveforms and how to flexibly support applications with different channel bandwidths are urgent problems to be solved.

### SUMMARY

In view of this, embodiments of the present application provide a data transmission method, a device, and a storage medium, thereby reducing a guard band and inter-system or inter-subband interference and improving spectral efficiency.

An embodiment of the present application provides a data transmission method. The data transmission method includes the steps below.

To-be-transmitted data is divided into N groups of first sequences, where an n-th group of first sequences of the N groups of first sequences includes k(n) pieces of data, and k(n) is a positive integer.

For each n from 1 to N, the n-th group of first sequences of the N groups of first sequences is multiplied by a corresponding coefficient group X(n) to obtain N groups of second sequences, where N is an integer greater than or equal to 2.

Inverse Fourier transform is performed on each group of the N groups of second sequences to obtain N groups of third sequences.

The inverse Fourier transform is performed on the N groups of third sequences to form a group of target time domain data sequences.

The target time domain data sequences are transmitted on preconfigured time-frequency resources.

An embodiment of the present application provides a communication device. The communication device includes a memory and at least one processor.

The memory is configured to store at least one program.

The at least one program, when executed by the at least one processor, causes the at least one processor to perform the method of any preceding embodiment.

An embodiment of the present application provides a storage medium. The storage medium is configured to store a computer program which, when executed by a processor, causes the processor to perform the method of any preceding embodiment.

### BRIEF DESCRIPTION OF DRAWINGS

FIG. 1 is a flowchart of a data transmission method according to an embodiment of the present application.
FIG. 2 is a diagram illustrating generation of target time domain data sequences according to an embodiment of the present application.
FIG. 3 is another diagram illustrating generation of target time domain data sequences according to an embodiment of the present application.
FIG. 4 is another diagram illustrating generation of target time domain data sequences according to an embodiment of the present application.
FIG. 5 is another diagram illustrating generation of target time domain data sequences according to an embodiment of the present application.
FIG. 6 is another diagram illustrating generation of target time domain data sequences according to an embodiment of the present application.
FIG. 7 is another diagram illustrating generation of target time domain data sequences according to an embodiment of the present application.
FIG. 8 is another diagram illustrating generation of target time domain data sequences according to an embodiment of the present application.
FIG. 9 is another diagram illustrating generation of target time domain data sequences according to an embodiment of the present application.
FIG. 10 is another diagram illustrating generation of target time domain data sequences according to an embodiment of the present application.
FIG. 11 is another diagram illustrating generation of target time domain data sequences according to an embodiment of the present application.
FIG. 12 is a diagram illustrating transmission of to-be-transmitted data according to an embodiment of the present application.
FIG. 13 is a block diagram of a data transmission apparatus according to an embodiment of the present application.
FIG. 14 is a diagram illustrating the structure of a communication device according to an embodiment of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

Long-Term Evolution (LTE) is a fourth-generation (4G) wireless cellular communication technology. LTE adopts orthogonal frequency-division multiplexing (OFDM) technology, and time-frequency resources composed of subcarriers and OFDM symbols constitute wireless physical time-frequency resources of an LTE system. At present, the OFDM technology has been widely applied in wireless communications. Due to the use of a cyclic prefix (CP), a CP-OFDM system is able to effectively solve the problem of multipath delay and divide a frequency selective channel into a set of parallel flat channels, which greatly simplifies a channel estimation method and achieves relatively high channel estimation accuracy. However, the performance of the CP-OFDM system is relatively sensitive to a frequency offset and a timing offset between adjacent subbands mainly because the system has a relatively large spectrum leakage, which easily causes inter-subband interference. At present, the LTE system adopts a guard band in frequency domain, reducing spectral efficiency. Therefore, new technologies are required to suppress out-of-band leakage.

The Fifth-Generation New Radio (5G NR) communication technology still adopts CP-OFDM as a basic waveform, and different numerologies may be adopted between two adjacent subbands, which damages the orthogonality between subcarriers and introduces new interference. To solve the interference problem, a relatively straightforward method is to insert a guard band between two transmission bands with different numerologies, causing a waste of frequency resources.

Future 6G services adopt frequency bands over a very wide range and are deployed in diverse manners, which require not only multiple bandwidth channels but also waveform schemes satisfying different scenarios. Independently implementing each waveform scheme increases the cost of a base station/terminal. How to design a unified waveform architecture to flexibly integrate multiple waveforms and how to flexibly support applications with different channel bandwidths are urgent problems to be solved.

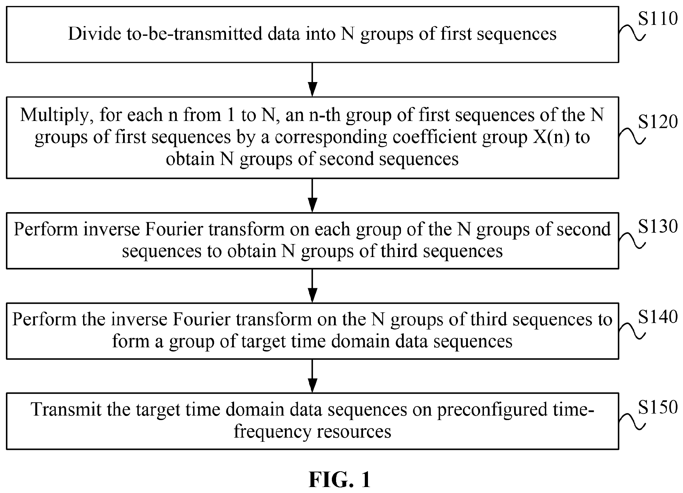

In an embodiment, FIG. 1 is a flowchart of a data transmission method according to an embodiment of the present application. This embodiment is applied to the case where multiple bandwidth channels and multiple waveforms are flexibly supported. As shown in FIG. 1, this embodiment includes S110 to S150.

In S110, to-be-transmitted data is divided into N groups of first sequences.

An n-th group of first sequences includes k(n) pieces of data, and k(n) is a positive integer. In an example, the to-be-transmitted data is a data sequence to be sent by a sending end to a receiving end. The to-be-transmitted data may be frequency domain data or time domain data. In an example, in the case where the to-be-transmitted data is the frequency domain data, the to-be-transmitted data is directly divided to obtain multiple first sequences that are also frequency domain data. In an example, in the case where the to-be-transmitted data is the time domain data, the to-be-transmitted data may be divided to obtain N groups of data that are also time domain data, and then the divided N groups of time domain data are subjected to Fourier transform to obtain the corresponding N groups of first sequences; or the to-be-transmitted data may be subjected to Fourier transform, and then frequency domain data obtained by the Fourier transform is divided to obtain the corresponding N groups of first sequences.

In S120, for each n from 1 to N, the n-th group of first sequences of the N groups of first sequences is multiplied by a corresponding coefficient group X(n) to obtain N groups of second sequences.

n = 1, 2, ..., N, and N is an integer greater than or equal to 2. In the embodiment, for each n from 1 to N, the n-th group of first sequences of the N groups of first sequences is multiplied by the coefficient group X(n) so that power compensation is performed on the first sequences. The coefficient group corresponding to the n-th group of first sequences is X(n), where n is 1, 2, ..., N.

In S130, inverse Fourier transform is performed on each group of the N groups of second sequences to obtain N groups of third sequences.

The inverse Fourier transform is performed on each group of second sequences to obtain the corresponding N groups of third sequences. Each group of third sequences is time domain data.

In S 140, the inverse Fourier transform is performed on the N groups of third sequences to form a group of target time domain data sequences.

In an example, the Fourier transform is performed on the N groups of third sequences to obtain corresponding N groups of new third sequences, which are all frequency domain data. Then, the inverse Fourier transform is performed on the N groups of new third sequences to form the group of target time domain data sequences.

In S150, the target time domain data sequences are transmitted on preconfigured time-frequency resources.

The to-be-transmitted data is divided into the N groups of first sequences. Each group of first sequences of the N groups of first sequences is multiplied by the corresponding coefficient group X(n) to obtain the N groups of second sequences. The inverse Fourier transform is performed on each group of second sequences to obtain the N groups of third sequences. The inverse Fourier transform is performed on the N groups of third sequences to form the group of target time domain data sequences. The group of target time domain data sequences is transmitted on the preconfigured time-frequency resources. Coefficient compensation is performed on the first sequences in advance, eliminating a performance loss caused by a power imbalance due to subsequent filters.

In an embodiment, before the inverse Fourier transform is performed on each group of second sequences, the method further includes the following: zero-padding is performed at two ends of each group of second sequences separately, where each group of second sequences after the zero-padding includes M×s(n) pieces of data, M is a positive integer, and s(n) ≥ k(n). The zero-padding is performed at the two ends of each group of second sequences, and then the inverse Fourier transform is performed on each group of second sequences after the zero-padding, eliminating inter-subband interference through oversampling. In an example, M may satisfy an i-th power of 2 (that is, 2*ⁱ*), where i is an integer greater than or equal to 0. In an example, s(n) satisfies the i-th power of 2 (that is, 2*ⁱ*), where i is an integer greater than or equal to 0. In an example, s(n) satisfies that *s*(*n*) *=* 2^*ceil*(*log*₂(*k*(*n*))), where *ceil*(*log*₂(*k*(*n*))) is used to return a minimum integer greater than or equal to *log*₂(*k*(*n*)). In an example, in the case where k(n) satisfies the i-th power of 2, *s*(*n*) = *k*(*n*).

In an embodiment, the number of points for performing the inverse Fourier transform on each group of second sequences is M×s(n). In the embodiment, the zero-padding is performed at the two ends of each group of second sequences to obtain second sequences including M×s(n) pieces of data, and then the inverse Fourier transform is performed on the second sequences including M×s(n) pieces of data.

In an embodiment, a channel bandwidth includes N subbands, and each of the N subbands corresponds to a respective group of the N groups of first sequences.

In an embodiment, multiplying, for each n from 1 to N, the n-th group of first sequences of the N groups of first sequences by the corresponding coefficient group X(n) includes performing frequency domain shaping on frequency domain data of the n-th group of first sequences.

In an embodiment, the n-th group of first sequences on different time domain symbols is multiplied by the same coefficient group X(n), where n = 1, 2, ..., N, and N is an integer greater than or equal to 2.

In an embodiment, the length of the n-th coefficient group X(n) is the same as k(n), where n = 1, 2, ..., N, and N is an integer greater than or equal to 2. The length of the n-th coefficient group X(n) refers to the number of coefficients included in the n-th coefficient group X(n). In an example, the number of coefficients included in the n-th coefficient group X(n) is the same as the number k(n) of pieces of data included in the corresponding first sequences.

In an embodiment, first sequences with the same k(n) are multiplied by the same coefficient group X(n). The first sequences including the same number of pieces of data are multiplied by the same coefficient group X(n).

In an embodiment, first sequences corresponding to subbands with the same subcarrier spacing are multiplied by the same coefficient group X(n), and first sequences corresponding to subbands with different subcarrier spacings are multiplied by different coefficient groups X(n). The first sequences corresponding to the subbands with the same subcarrier spacing adopt the same coefficient group X(n), and the first sequences corresponding to the subbands with different subcarrier spacings adopt different coefficient groups X(n), which can ensure the unity of coefficients for the same subcarrier spacing. Due to different numbers of pieces of data for different subcarrier spacings, the coefficient groups X(n) include different numbers of coefficients.

In an embodiment, the n-th coefficient group X(n) = *F(n)*/*f(n), F(n)* denotes ideal root-raised-cosine filter frequency domain coefficients at frequency domain subcarrier positions corresponding to the n-th group of first sequences, *f*(*n*) denotes actual root-raised-cosine filter frequency domain coefficients at the frequency domain subcarrier positions corresponding to the n-th group of first sequences, n = 1, 2, ..., N, and N is an integer greater than or equal to 2. The n-th coefficient group is configured to be the ratio of the ideal root-raised-cosine filter frequency domain coefficients to the actual root-raised-cosine filter frequency domain coefficients at the frequency domain subcarrier positions corresponding to the n-th group of first sequences so that the sending end can be compensated to ideal filters.

In an embodiment, the n-th coefficient group X(n) = 1/*f*(*n*), *f*(*n*) denotes the actual root-raised-cosine filter frequency domain coefficients at the frequency domain subcarrier positions corresponding to the n-th group of first sequences, n = 1, 2, ..., N, and N is an integer greater than or equal to 2. The n-th coefficient group is configured to be the ratio of 1 to the actual root-raised-cosine filter frequency domain coefficients at the frequency domain subcarrier positions corresponding to the n-th group of first sequences so that the sending end can be compensated to 1. In an example, the n-th coefficient group may have different configurations so that whether to compensate the sending end to the ideal filters or to 1 can be selected.

In an embodiment, power normalization is performed on the n-th coefficient group X(n) such that the n-th coefficient group X(n) satisfies that mean(|*X*(*n*)|²) = 1, where n = 1, 2, ..., N, and N is an integer greater than or equal to 2. The power normalization is performed on the n-th coefficient group X(n) to facilitate subsequent data processing.

In an embodiment, the n-th coefficient group X(n) includes p ones at each of two ends of the n-th coefficient group X(n), n = 1, 2, ..., N, N is an integer greater than or equal to 2, and p is an integer greater than or equal to 0.

In an embodiment, a coefficient group *X'*(*n*), which is obtained by removing the pones from each of the two ends of the n-th coefficient group X(n), satisfies that *X'*(*n*) *= F'*(*n*)/*f'*(*n*), *F'*(*n*) denotes ideal root-raised-cosine filter frequency domain coefficients at frequency domain subcarrier positions corresponding to the n-th group of first sequences after p subcarriers are removed from each of the two ends of subcarriers corresponding to the n-th group of first sequences, *f'*(*n*) denotes actual root-raised-cosine filter frequency domain coefficients at the frequency domain subcarrier positions corresponding to the n-th group of first sequences after the p subcarriers are removed from each of the two ends of the subcarriers corresponding to the n-th group of first sequences, n = 1, 2, ..., N, and N is an integer greater than or equal to 2. In the case where the n-th coefficient group X(n) includes the p ones at each of the two ends of the n-th coefficient group X(n), the coefficient group *X'*(*n*) may be determined according to the ratio of the ideal root-raised-cosine filter frequency domain coefficients to the actual root-raised-cosine filter frequency domain coefficients at the frequency domain subcarrier positions corresponding to the n-th group of first sequences after the p subcarriers are removed from each of the two ends of the subcarriers corresponding to the n-th group of first sequences so that mirror images of edge subcarriers can be prevented from excessive power due to frequency domain spectrum shaping (FDSS), thereby allowing coefficient compensation to be omitted for the edge portions and performed only on the intermediate portions.

In an embodiment, the coefficient group *X'*(*n*), which is obtained by removing the p ones from each of the two ends of the n-th coefficient group X(n), satisfies that *X'*(*n*) *=* 1/*f'*(*n*), *f'*(*n*) denotes the actual root-raised-cosine filter frequency domain coefficients at the frequency domain subcarrier positions corresponding to the n-th group of first sequences after the p subcarriers are removed from each of the two ends of the n-th coefficient group X(n), n = 1, 2, ..., N, and N is an integer greater than or equal to 2. In the case where the n-th coefficient group X(n) includes the p ones at each of the two ends of the n-th coefficient group X(n), the coefficient group *X'*(*n*) may be determined according to the ratio of 1 to the actual root-raised-cosine filter frequency domain coefficients at the frequency domain subcarrier positions corresponding to the n-th group of first sequences after the p subcarriers are removed from each of the two ends of the subcarriers corresponding to the n-th group of first sequences so that the mirror images of the edge subcarriers can be prevented from excessive power due to the FDSS, thereby allowing coefficient compensation to be omitted for the edge portions and performed only on the intermediate portions.

In an embodiment, the power normalization is performed on the n-th coefficient group *X'*(*n*) such that the n-th coefficient group *X'*(*n*) satisfies that mean(|*X*'(*n*)|²) = 1, where n = 1, 2, ..., N, and N is an integer greater than or equal to 2.

In an embodiment, the number k(n) of pieces of data included in each group of first sequences satisfies one of the following conditions: being any positive integer, being an integer multiple of a resource block (RB), being the i-th power of 2, the ratio of adjacent two k(n) satisfies the i-th power of 2, or all k(n) are the same. In an example, the number k(n) of pieces of data included in each group of first sequences is any positive integer. In an example, the number k(n) of pieces of data included in each group of first sequences satisfies an integer multiple of 12, that is, an integer multiple of the RB. In an example, the number k(n) of pieces of data included in each group of first sequences satisfies the i-th power of 2 (that is, 2*ⁱ*), where i is an integer greater than or equal to 0. In an example, the ratio of the numbers k(n) of pieces of data included in each group of first sequences satisfies the i-th power of 2 (that is, 2*ⁱ*), where i is an integer greater than or equal to 0. In an example, the number k(n) of pieces of data included in each group of first sequences is the same.

In an embodiment, the zero-padding is performed at two ends of each group of second sequences, and [*M* × *s*(*n*) - *k*(*n*)]/2 zeros are added at each of the two ends of each group of second sequences.

In an embodiment, the number of points for performing the inverse Fourier transform on each group of second sequences satisfies one of the following conditions: the ratio of the numbers of points for performing the inverse Fourier transform on adjacent two groups of second sequences satisfies the i-th power of 2; or the number of points for performing the inverse Fourier transform on each group of second sequences is the same; where i is an integer. In an example, the inverse Fourier transform with M×s(n) points is performed on each group of second sequences, and the ratio of the numbers of points for performing the inverse Fourier transform on each group of second sequences satisfies the i-th power of 2 (that is, 2*ⁱ*), where i is an integer greater than or equal to 0. In an example, the inverse Fourier transform with M×s(n) points is performed on each group of second sequences separately, and the number of points for performing the inverse Fourier transform on each group of second sequences is the same.

In an embodiment, the to-be-transmitted data includes at least data subjected to constellation point modulation; and the to-be-transmitted data further includes at least one piece of reference signal data. In an embodiment, the to-be-transmitted data may include the data subjected to constellation point modulation. In an embodiment, the to-be-transmitted data may include the data subjected to constellation point modulation and the at least one piece of reference signal data.

In an embodiment, that the inverse Fourier transform is performed on the N groups of third sequences to form the group of target time domain data sequences includes the following: frequency domain zero-padding and a cyclic shift are performed on other P groups of initial frequency domain data sequences in sequence to obtain other P groups of target frequency domain data sequences; the inverse Fourier transform is performed on the N groups of third sequences and the other P groups of target frequency domain data sequences to form the group of target time domain data sequences, where the other P groups of target frequency domain data sequences include data after M-fold frequency domain oversampling and are not included in data sequences generated from the to-be-transmitted data. In an example, the inverse Fourier transform is performed on the N groups of third sequences together with the other P groups of initial frequency domain data sequences to form the group of target time domain data sequences. The other P groups of initial frequency domain data sequences may be the data after M-fold frequency domain oversampling or may not belong to the data sequences generated from the to-be-transmitted data. In an example, the frequency domain zero-padding and the cyclic shift are performed on the other P groups of initial frequency domain data sequences to obtain the other P groups of target frequency domain data sequences; and then the inverse Fourier transform is performed on the N groups of third sequences together with the other P groups of target frequency domain data sequences to form the group of target time domain data sequences.

In an embodiment, performing the inverse Fourier transform on the N groups of third sequences to form the group of target time domain data sequences includes: performing oversampled inverse Fourier transform on every N pieces of data, where each of the every N pieces of data is from a respective group of the N groups of third sequences. In an example, a process of performing the inverse Fourier transform on the N groups of third sequences includes: performing the oversampled inverse Fourier transform on every N pieces of data, where each of the every N pieces of data is from a respective group of the N groups of third sequences.

In an embodiment, multiple initial time domain data sequences generated by multiple inverse Fourier transform operations on the third sequences are serially concatenated to form the group of target time domain data sequences, and the number of the initial time domain data sequences is equal to the number of the inverse Fourier transform operations. An initial time domain data sequence refers to a sub-symbol obtained by performing the oversampled inverse Fourier transform on the third sequences. In the embodiment, the oversampled inverse Fourier transform is performed on the N pieces of data from the third sequences to obtain a corresponding sub-symbol, and the sub-symbol is repeatedly extended and serially concatenated in the time domain to obtain the corresponding group of target time domain data sequences.

In an embodiment, a process of generating the initial time domain data sequence by one inverse Fourier transform operation of the multiple inverse Fourier transform operations includes: extracting the N pieces of data from the N groups of third sequences, where the number of the N pieces of data is the same as the number of the N groups of first sequences; and performing the oversampled inverse Fourier transform on the N pieces of data to obtain the corresponding initial time domain data sequence, where each of the N pieces of data is from a respective group of the N groups of third sequences. For example, assuming that the N groups of third sequences are distributed in N rows (that is, one group of third sequences is distributed in one row), the N pieces of data are selected according to a column number (that is, data in one column is selected), and then the oversampled inverse Fourier transform is performed on every selected N pieces of data (that is, data in each column). In another example, assuming that the N groups of third sequences are distributed in N columns (that is, one group of third sequences is distributed in one column), the N pieces of data are selected according to a row number (that is, data in one row is selected), and then the oversampled inverse Fourier transform is performed on every selected N pieces of data (that is, data in each row).

In an embodiment, a serial concatenation interval for the target time domain data sequences is 1/M of the length obtained by performing the oversampled inverse Fourier transform on N pieces of target data. In the embodiment, the target time domain data sequences generated by the inverse Fourier transform are obtained through serial concatenation, and the serial concatenation interval between every adjacent two groups of initial time domain data sequences is half of the length obtained by performing the oversampled inverse Fourier transform on every N pieces of target data, that is, half of the length of the sub-symbol.

In an embodiment, a process of generating the multiple initial time domain data sequences by the multiple inverse Fourier transform operations includes: for subbands with different subcarrier spacings, using the length of the third sequences corresponding to a subband with a minimum subcarrier spacing as a reference length; for third sequences corresponding to subbands with non-minimum subcarrier spacings, selecting at least two groups of third sequences, serially concatenating the at least two groups of third sequences to form a sequence with the reference length, forming new N groups of third sequences, and performing the multiple inverse Fourier transform operations on the new N groups of third sequences to obtain the corresponding multiple initial time domain data sequences. The subbands with different subcarrier spacings represent the first sequences with different numbers of pieces of data.

In an embodiment, each group of first sequences is transmitted in a corresponding frequency domain resource block, where each frequency domain resource block includes Z subcarriers, and Z is a positive integer; and the number of pieces of data included in each group of second sequences satisfies one of the following conditions: being M×s(n), or being greater than or equal to M times the number of subcarriers included in each frequency domain resource block. In an example, the number of pieces of data included in each group of second sequences of the N groups of second sequences is M×s(n), that is, greater than or equal to M times the number of subcarriers included in each frequency domain resource block.

In an embodiment, a zero-frequency position for performing the inverse Fourier transform on the second sequences is located within a range of a corresponding frequency domain resource block; and zero-frequency positions for performing the inverse Fourier transform on different groups of second sequences are different. In the embodiment, the zero-frequency position refers to a zero subcarrier within the frequency domain resource block (that is, the 0-th subcarrier, which may also be understood as a subcarrier with an index of 0).

In an embodiment, the zero-frequency position for the inverse Fourier transform is one of the subcarriers included in each frequency domain resource block. In the embodiment, the zero-frequency position (that is, the zero subcarrier) for performing the inverse Fourier transform on each group of original data sequences is one of the subcarriers included in each frequency domain resource block.

In an embodiment, frequency domain resource blocks include all frequency domain resource blocks in a channel bandwidth or part of the frequency domain resource blocks in the channel bandwidth.

The to-be-transmitted data includes all to-be-transmitted data in the channel bandwidth or part of the to-be-transmitted data in the channel bandwidth.

In an embodiment, the data transmission method further includes performing filtering on the group of target time domain data sequences, where the filtering includes one of single-phase filtering or poly-phase filtering.

In an embodiment, a filtering function used for the poly-phase filtering includes one of a root-raised-cosine function, a raised-cosine function, a rectangular function, or an isotropic orthogonal transform algorithm.

In an embodiment, the data transmission method further includes performing a windowing operation on the group of target time domain data sequences.

In the following embodiments, a process of generating the target time domain data sequences is described by using different examples.

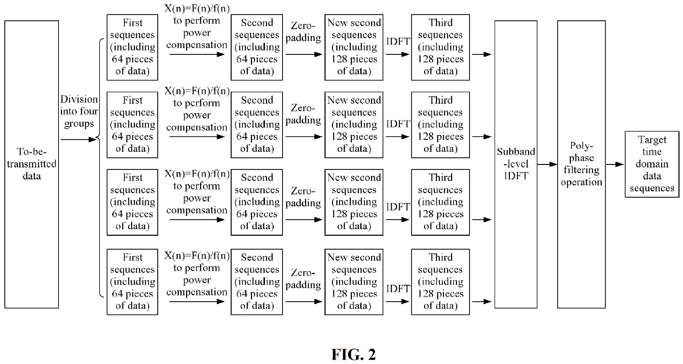

In an example, FIG. 2 is a diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 64, and 32 zeros are padded at each of two ends of each group of second sequences.

As shown in FIG. 2, to-be-transmitted data is divided into four groups of first sequences, and each group of first sequences includes 64 pieces of data. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have the same subcarrier spacing, X(1) = X(2) = X(3) = X(4), and each X(n) includes 64 coefficients. Then, 32 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

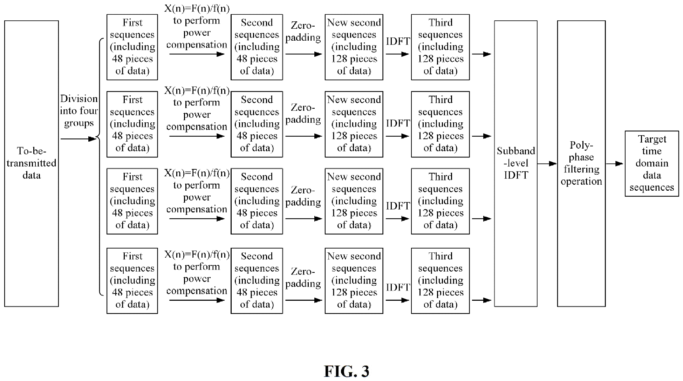

In an example, FIG. 3 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 48, and 40 zeros are padded at each of two ends of each group of second sequences.

As shown in FIG. 3, to-be-transmitted data is divided into four groups of first sequences, and each group of first sequences includes 48 pieces of data, that is, four RBs. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have the same subcarrier spacing, X(1) = X(2) = X(3) = X(4), and each X(n) includes 48 coefficients. Then, 40 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

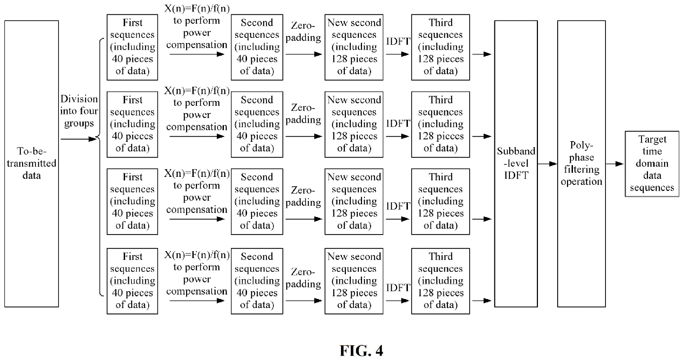

In an example, FIG. 4 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 40, and 44 zeros are padded at each of two ends of each group of second sequences.

As shown in FIG. 4, to-be-transmitted data is divided into four groups of first sequences, and each group of first sequences includes 40 pieces of data. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have the same subcarrier spacing, X(1) = X(2) = X(3) = X(4), and each X(n) includes 40 coefficients. Then, 44 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

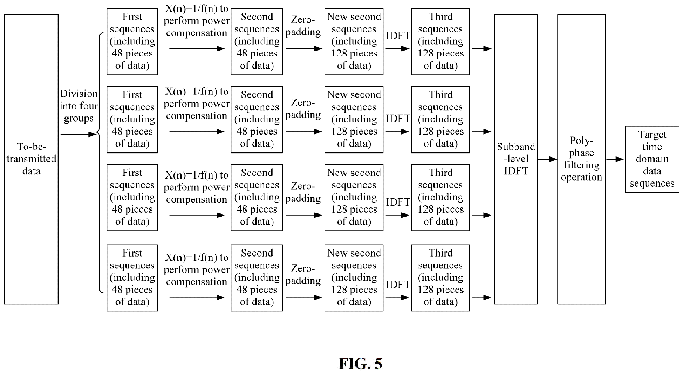

In an example, FIG. 5 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 48, and 40 zeros are padded at each of two ends of each group of second sequences.

As shown in FIG. 5, to-be-transmitted data is divided into four groups of first sequences, and each group of first sequences includes 48 pieces of data, that is, four RBs. Data of each group of first sequences of the four groups of first sequences is multiplied by a corresponding coefficient group X(n) so that power compensation is performed to obtain four groups of second sequences. The coefficient group X(n) = 1/*f*(*n*), *f*(*n*) denotes actual root-raised-cosine filter frequency domain coefficients at frequency domain subcarrier positions corresponding to an n-th group of first sequences, and n = 1, 2, 3, 4. Since four subbands have the same subcarrier spacing, X(1) = X(2) = X(3) = X(4), and each X(n) includes 48 coefficients. Then, 40 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

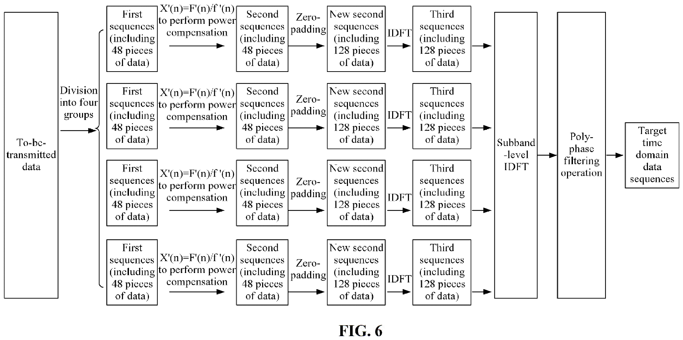

In an example, FIG. 6 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 48, and 40 zeros are padded at each of two ends of each group of second sequences.

As shown in FIG. 6, to-be-transmitted data is divided into four groups of first sequences, and each group of first sequences includes 48 pieces of data, that is, four RBs. Data of each group of first sequences of the four groups of first sequences is multiplied by a corresponding coefficient group X(n) so that power compensation is performed to obtain four groups of second sequences. The n-th coefficient group X(n) includes eight ones at each of two ends of the n-th coefficient group X(n), where n = 1, 2, 3, 4. A coefficient group *X'*(*n*), which is obtained by removing the eight ones from each of the two ends of the n-th coefficient group X(n), satisfies that *X'*(*n*) = *F'*(*n*)/*f'*(*n*), *F'*(*n*) denotes ideal root-raised-cosine filter frequency domain coefficients at subcarrier positions corresponding to an n-th group of first sequences after eight subcarriers are removed from each of the two ends of subcarriers corresponding to the n-th group of first sequences, *f'(n)* denotes actual root-raised-cosine filter frequency domain coefficients at the subcarrier positions corresponding to the n-th group of first sequences after the eight subcarriers are removed from each of the two ends of the subcarriers corresponding to the n-th group of first sequences, and n = 1, 2, 3, 4. Since four subbands have the same subcarrier spacing, X(1) = X(2) = X(3) = X(4), and each X(n) includes 48 coefficients. Then, 40 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

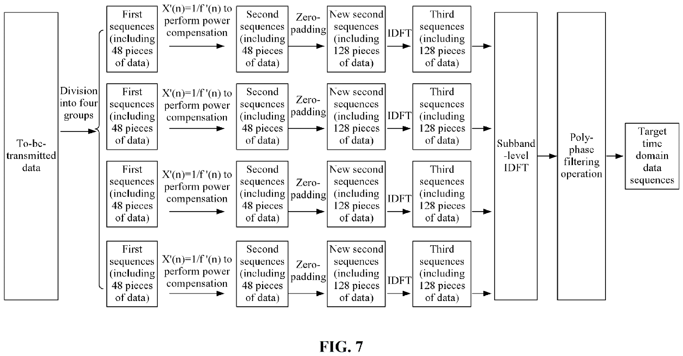

In an example, FIG. 7 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 48, and 40 zeros are padded at each of two ends of each group of second sequences.

As shown in FIG. 7, to-be-transmitted data is divided into four groups of first sequences, and each group of first sequences includes 48 pieces of data, that is, four RBs. Data of each group of first sequences of the four groups of first sequences is multiplied by a corresponding coefficient group X(n) so that power compensation is performed to obtain four groups of second sequences. The n-th coefficient group X(n) includes eight ones at each of two ends of the n-th coefficient group X(n), where n = 1, 2, 3, 4. A coefficient group *X'*(*n*), which is obtained by removing the eight ones from each of the two ends of the n-th coefficient group X(n), satisfies that *X'*(*n*) = 1/*f'*(*n*), *f'*(*n*) denotes actual root-raised-cosine filter frequency domain coefficients at subcarrier positions corresponding to an n-th group of first sequences after eight subcarriers are removed from each of the two ends of the n-th coefficient group X(n), and n = 1, 2, 3, 4. Since four subbands have the same subcarrier spacing, X(1) = X(2) = X(3) = X(4), and each X(n) includes 48 coefficients. Then, 40 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

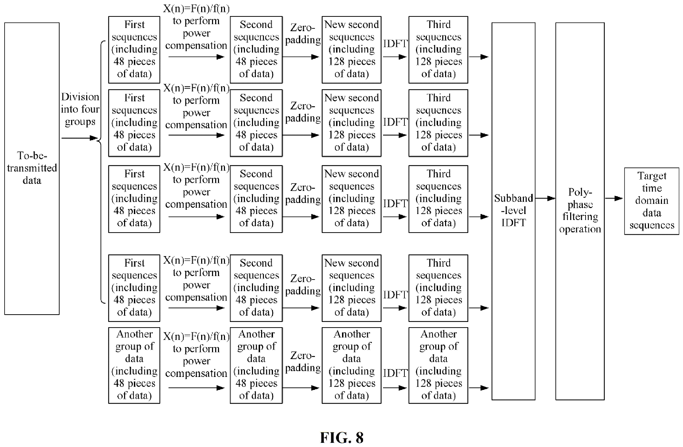

In an example, FIG. 8 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 48, and 40 zeros are padded at each of two ends of each group of second sequences.

As shown in FIG. 8, to-be-transmitted data is divided into four groups of first sequences, and each group of first sequences includes 48 pieces of data, that is, four RBs. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have the same subcarrier spacing, X(1) = X(2) = X(3) = X(4), and each X(n) includes 48 coefficients. Then, 40 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences and other groups of data to form a group of target time domain data sequences. The other groups of data include 48 pieces of data and are also subjected to operations such as zero-padding, power compensation, and IDFT and then subjected to subband-level processing together with the four groups of third sequences. The group of target time domain data sequences is transmitted on time-frequency resources.

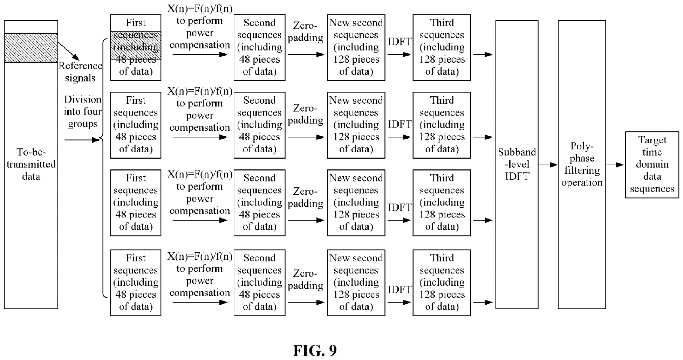

In an example, FIG. 9 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 48, the first group of first sequences includes 24 pieces of reference signal data, and 40 zeros are padded at each of two ends of each group of second sequences.

As shown in FIG. 9, to-be-transmitted data is divided into four groups of first sequences, and each group of first sequences includes 48 pieces of data, that is, four RBs, where the first group of first sequences includes 24 reference signals. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have the same subcarrier spacing, X(1) = X(2) = X(3) = X(4), and each X(n) includes 48 coefficients. Then, 40 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. Subband-level inverse Fourier transform and poly-phase filtering are performed on the four groups of third sequences to form a group of target time domain data sequences. The group of target time domain data sequences is transmitted on time-frequency resources.

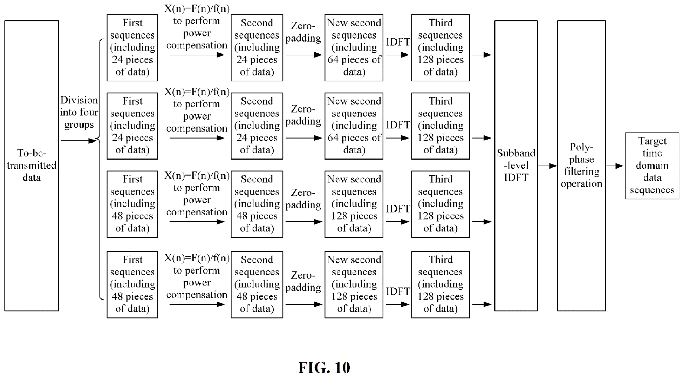

In an example, FIG. 10 is another diagram illustrating generation of target time domain data sequences according to an embodiment of the present application. In the embodiment, the process of generating the target time domain data sequences is described by using an example in which the number N of groups of first sequences is 4, the first two groups of first sequences include the same number of pieces of data, that is, 24, the last two groups of first sequences include the same number of pieces of data, that is, 48, 20 zeros are padded at each of two ends of each of the first two groups of second sequences, and 40 zeros are padded at each of two ends of each of the last two groups of second sequences.

As shown in FIG. 10, to-be-transmitted data is divided into four groups of first sequences, the first two groups of first sequences each include 24 pieces of data, that is, 2 RBs, and the last two groups of first sequences each include 48 pieces of data, that is, 4 RBs. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have different subcarrier spacings, X(1) = X(2), X(3) = X(4), X(1) and X(2) each include 24 coefficients, and X(3) and X(4) each include 48 coefficients. Then, 20 zero subcarriers are added at each of the two ends of each group of second sequences of the first two groups of second sequences to obtain corresponding new second sequences, where each group of new second sequences includes 64 pieces of data; and 40 zero subcarriers are added at each of the two ends of each group of second sequences of the last two groups of second sequences to obtain corresponding new second sequences, where each group of new second sequences includes 128 pieces of data. That is, four groups of new second sequences are formed in total. Next, 64-point inverse Fourier transform is performed on each of the first two groups of new second sequences, and 128-point inverse Fourier transform is performed on each of the last two groups of new second sequences. Data in each of the first two groups of new second sequences is serially concatenated with symbol data at the next moment to form two groups of 128-point data, and the two groups of 128-point data and the last two groups of new second sequences together form four groups of 128-point third sequences. Subband-level inverse Fourier transform and poly-phase filtering are performed on the four groups of third sequences to form a group of target time domain data sequences. The group of target time domain data sequences is transmitted on time-frequency resources.

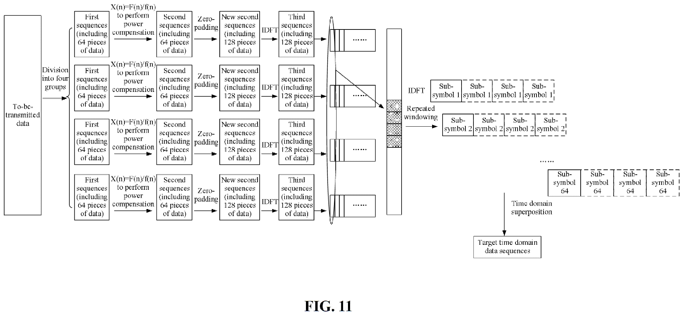

In an example, FIG. 11 is another diagram illustrating generation of target time domain data sequences according to an embodiment of the present application. In the embodiment, the process of generating the target time domain data sequences is described by using an example in which the number N of groups of first sequences is 4, each group of first sequences includes the same number of pieces of data, that is, 64, and 32 zeros are padded at each of two ends of each group of second sequences.

As shown in FIG. 11, to-be-transmitted data is divided into four groups of first sequences, and each group of first sequences includes 64 pieces of data. Data of each group of first sequences of the four groups of first sequences is multiplied by a corresponding coefficient group X(n) so that power compensation is performed to obtain four groups of second sequences. The coefficient group X(n) = *F*(*n*)/*f*(*n*), *F*(*n*) denotes ideal root-raised-cosine filter frequency domain coefficients at frequency domain subcarrier positions corresponding to an n-th group of first sequences, *f*(*n*) denotes actual root-raised-cosine filter frequency domain coefficients at the frequency domain subcarrier positions corresponding to the n-th group of first sequences, and n = 1, 2, 3, 4. Since four subbands have the same subcarrier spacing, X(1) = X(2) = X(3) = X(4), and each X(n) includes 64 coefficients. Then, 32 zero subcarriers are added at each of the two ends of each group of second sequences to form four groups of new second sequences, where each group of new second sequences includes 128 pieces of data. Next, 128-point inverse Fourier transform is performed on the new second sequences to form four groups of third sequences. One piece of data is extracted from each group of new second sequences in sequence according to a column to obtain four pieces of data. Oversampled 16-point inverse Fourier transform is performed on every extracted four pieces of data to obtain a sub-symbol. Each sub-symbol is repeatedly extended four times. Finally, 128 sub-symbols are serially concatenated in the time domain to form a group of target time domain data sequences, where a serial concatenation interval is 8 points, that is, half the length of the sub-symbol. The group of target time domain data sequences is transmitted on time-frequency resources.

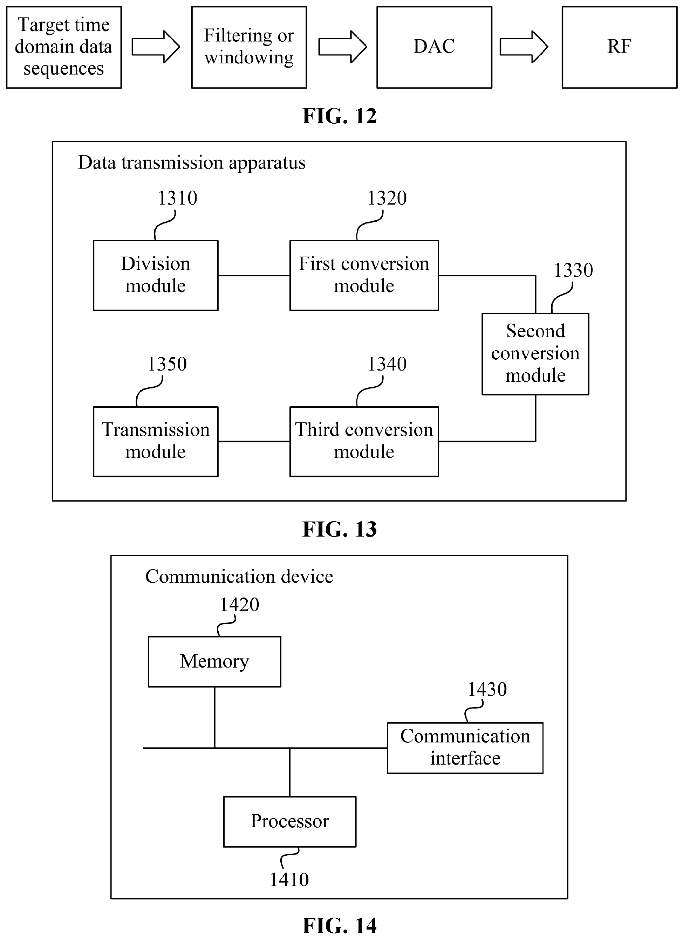

In an example, FIG. 12 is a diagram illustrating transmission of to-be-transmitted data according to an embodiment of the present application. As shown in FIG. 12, the to-be-transmitted data is subjected to windowing or filtering, digital-to-analog conversion (DAC), and radio frequency (RF) processing in sequence.

As shown in FIG. 12, the transmission of the to-be-transmitted data further includes performing windowing or filtering on target time domain data sequences corresponding to the to-be-transmitted data, and performing the DAC and RF processing.

The windowing includes: grouping the target time domain data sequences corresponding to the to-be-transmitted data, performing periodic extension, performing point-wise multiplication with a preset function, and performing staggered superposition between groups.

The filtering includes single-phase filtering or poly-phase filtering. The poly-phase filtering is to filter each of new N groups of data sequences.

In an embodiment, FIG. 13 is a block diagram of a data transmission apparatus according to an embodiment of the present application. As shown in FIG. 13, the data transmission apparatus of this embodiment includes a division module 1310, a first conversion module 1320, a second conversion module 1330, a third conversion module 1340, and a transmission module 1350.

The division module 1310 is configured to divide to-be-transmitted data into N groups of first sequences, where an n-th group of first sequences of the N groups of first sequences includes k(n) pieces of data, and k(n) is a positive integer.

The first conversion module 1320 is configured to multiply, for each n from 1 to N, the n-th group of first sequences of the N groups of first sequences by a corresponding coefficient group X(n) to obtain N groups of second sequences, where N is an integer greater than or equal to 2.

The second conversion module 1330 is configured to perform inverse Fourier transform on each group of the N groups of second sequences to obtain N groups of third sequences.

The third conversion module 1340 is configured to perform the inverse Fourier transform on the N groups of third sequences to form a group of target time domain data sequences.

The transmission module 1350 is configured to transmit the target time domain data sequences on preconfigured time-frequency resources.

In an embodiment, before the inverse Fourier transform is performed on each group of second sequences, the following is further included:

Zero-padding is performed at two ends of each group of second sequences separately, where each group of second sequences after the zero-padding includes M×s(n) pieces of data, M is a positive integer, and s(n) ≥ k(n).

In an embodiment, the number of points for performing the inverse Fourier transform on each group of second sequences is M×s(n).

In an embodiment, a channel bandwidth includes N subbands, and each of the N subbands corresponds to a respective group of the N groups of first sequences.

In an embodiment, multiplying, for each n from 1 to N, the n-th group of first sequences of the N groups of first sequences by the corresponding coefficient group X(n) includes performing frequency domain shaping on frequency domain data of the n-th group of first sequences.

In an embodiment, the n-th group of first sequences on different time domain symbols is multiplied by the same coefficient group X(n), where n = 1, 2, ..., N, and N is an integer greater than or equal to 2.

In an embodiment, the length of the n-th coefficient group X(n) is the same as k(n), where n = 1, 2, ..., N, and N is an integer greater than or equal to 2.

In an embodiment, first sequences with the same k(n) are multiplied by the same coefficient group X(n).

In an embodiment, first sequences corresponding to subbands with the same subcarrier spacing are multiplied by the same coefficient group X(n), and first sequences corresponding to subbands with different subcarrier spacings are multiplied by different coefficient groups X(n).

In an embodiment, the n-th coefficient group X(n) = *F*(*n*)/*f*(*n*), *F*(*n*) denotes ideal root-raised-cosine filter frequency domain coefficients at frequency domain subcarrier positions corresponding to the n-th group of first sequences, *f*(*n*) denotes actual root-raised-cosine filter frequency domain coefficients at the frequency domain subcarrier positions corresponding to the n-th group of first sequences, n = 1, 2, ..., N, and N is an integer greater than or equal to 2.

In an embodiment, the n-th coefficient group X(n) = 1/*f*(*n*), *f*(*n*) denotes the actual root-raised-cosine filter frequency domain coefficients at the frequency domain subcarrier positions corresponding to the n-th group of first sequences, n = 1, 2, ..., N, and N is an integer greater than or equal to 2.

In an embodiment, power normalization is performed on the n-th coefficient group X(n) such that the n-th coefficient group X(n) satisfies that mean(|*X*(*n*)|²) = 1, where n = 1, 2, ..., N, and N is an integer greater than or equal to 2.

In an embodiment, the n-th coefficient group X(n) includes p ones at each of two ends of the n-th coefficient group X(n), n = 1, 2, ..., N, N is an integer greater than or equal to 2, and p is an integer greater than or equal to 0.

In an embodiment, a coefficient group *X'*(*n*), which is obtained by removing the p ones from each of the two ends of the n-th coefficient group X(n), satisfies that *X'*(*n*) *= F'*(*n*)/*f'*(*n*), *F'*(*n*) denotes ideal root-raised-cosine filter frequency domain coefficients at frequency domain subcarrier positions corresponding to the n-th group of first sequences after p subcarriers are removed from each of two ends of subcarriers corresponding to the n-th group of first sequences, *f'*(*n*) denotes actual root-raised-cosine filter frequency domain coefficients at the frequency domain subcarrier positions corresponding to the n-th group of first sequences after the p subcarriers are removed from each of the two ends of the subcarriers corresponding to the n-th group of first sequences, n = 1, 2, ..., N, and N is an integer greater than or equal to 2.

In an embodiment, the coefficient group *X'*(*n*), which is obtained by removing the p ones from each of the two ends of the n-th coefficient group X(n), satisfies that *X'*(*n*) *=* 1/*f'*(*n*), *f'*(*n*) denotes the actual root-raised-cosine filter frequency domain coefficients at the frequency domain subcarrier positions corresponding to the n-th group of first sequences after the p subcarriers are removed from each of the two ends of the n-th coefficient group X(n), n = 1, 2, ..., N, and N is an integer greater than or equal to 2.

In an embodiment, the power normalization is performed on the n-th coefficient group *X'*(*n*) such that the n-th coefficient group *X'*(*n*) satisfies that mean(|*X*'(*n*)|²) = 1, where n = 1, 2, ..., N, and N is an integer greater than or equal to 2.

In an embodiment, the number k(n) of pieces of data included in each group of first sequences satisfies one of the following conditions: being any positive integer; being an integer multiple of the number of subcarriers in an RB; being the i-th power of 2; the ratio of adjacent two k(n) satisfies the i-th power of 2; or all k(n) are the same.

In an embodiment, the zero-padding is performed at the two ends of each group of second sequences separately, and [*M* × *s*(*n*) - *k*(*n*)]/2 zeros are added at each of the two ends of each group of second sequences.

In an embodiment, the number of points for performing the inverse Fourier transform on each group of second sequences satisfies one of the following conditions: the ratio of the numbers of points for performing the inverse Fourier transform on adjacent two groups of second sequences satisfies the i-th power of 2; or the number of points for performing the inverse Fourier transform on each group of second sequences is the same; where i is an integer.

In an embodiment, performing the inverse Fourier transform on the N groups of third sequences to form the group of target time domain data sequences includes the following: frequency domain zero-padding and a cyclic shift are performed on other P groups of initial frequency domain data sequences in sequence to obtain other P groups of target frequency domain data sequences; the inverse Fourier transform is performed on the N groups of third sequences and the other P groups of target frequency domain data sequences to form the group of target time domain data sequences, where the other P groups of target frequency domain data sequences include data after M-fold frequency domain oversampling and are not included in data sequences generated from the to-be-transmitted data.

In an embodiment, performing the inverse Fourier transform on the N groups of third sequences to form the group of target time domain data sequences includes the following: oversampled inverse Fourier transform is performed on every N pieces of data, where each of the every N pieces of data is from a respective group of the N groups of third sequences.

In an embodiment, multiple initial time domain data sequences generated by multiple inverse Fourier transform operations on the third sequences are serially concatenated to form the group of target time domain data sequences, and the number of the initial time domain data sequences is equal to the number of the inverse Fourier transform operations.

In an embodiment, a process of generating an initial time domain data sequence by one inverse Fourier transform operation of the multiple inverse Fourier transform operations includes the following: N pieces of data are extracted from the N groups of third sequences, where the number of the N pieces of data is the same as the number of the N groups of first sequences; the oversampled inverse Fourier transform is performed on the N pieces of data to obtain a corresponding initial time domain data sequence, where each of the N pieces of data is from a respective group of the N groups of third sequences.

In an embodiment, a serial concatenation interval for the target time domain data sequences is 1/M of the length obtained by performing the oversampled inverse Fourier transform on N pieces of target data.

In an embodiment, a process of generating the multiple initial time domain data sequences by the multiple inverse Fourier transform operations includes the following: for subbands with different subcarrier spacings, the length of the third sequences corresponding to a subband with a minimum subcarrier spacing is used as a reference length; for third sequences corresponding to subbands with non-minimum subcarrier spacings, at least two groups of third sequences are selected and serially concatenated to form a sequence with the reference length, new N groups of third sequences are formed, and the multiple inverse Fourier transform operations are performed on the new N groups of third sequences to obtain the corresponding multiple initial time domain data sequences.

In an embodiment, each group of first sequences is transmitted in a corresponding frequency domain resource block, where each frequency domain resource block includes Z subcarriers.

The number of pieces of data included in each group of second sequences satisfies one of the following conditions: being M×s(n), or being greater than or equal to M times the number of subcarriers included in each frequency domain resource block.

In an embodiment, a zero-frequency position for performing the inverse Fourier transform on the second sequences is located within a range of a corresponding frequency domain resource block.

Zero-frequency positions for performing the inverse Fourier transform on different groups of second sequences are different.

In an embodiment, the zero-frequency position for the inverse Fourier transform is one of the subcarriers included in each frequency domain resource block.

In an embodiment, frequency domain resource blocks include all frequency domain resource blocks in a channel bandwidth or part of the frequency domain resource blocks in the channel bandwidth.

The to-be-transmitted data includes all to-be-transmitted data in the channel bandwidth or part of the to-be-transmitted data in the channel bandwidth.

In an embodiment, the data transmission apparatus further includes a filtering module.

The filtering module is configured to perform filtering on the group of target time domain data sequences, where the filtering includes one of single-phase filtering or poly-phase filtering.

In an embodiment, a filtering function used for the poly-phase filtering includes one of a root-raised-cosine function, a raised-cosine function, a rectangular function, or an isotropic orthogonal transform algorithm.

In an embodiment, the data transmission apparatus further includes a windowing module.

The windowing module is configured to perform a windowing operation on the group of target time domain data sequences.

The data transmission apparatus of this embodiment is configured to perform the data transmission method of the embodiment shown in FIG. 1. The data transmission apparatus of this embodiment and the data transmission method have similar implementation principles and technical effects, which are not repeated here.

In an embodiment, FIG. 14 is a diagram illustrating the structure of a communication device according to an embodiment of the present application. As shown in FIG. 14, the device of the present application includes a processor 1410, a memory 1420, and a communication interface 1430. One or more processors 1410 may be provided in the device. One processor 1410 is shown as an example in FIG. 14. One or more memories 1420 may be provided in the device. One memory 1420 is shown as an example in FIG. 14. The processor 1410, the memory 1420, and the communication interface 1430 in the device may be connected via a bus or in other manners. The connection via a bus is shown as an example in FIG. 14. For example, the communication device may be disposed on a base station side or a terminal side. As a computer-readable storage medium, the memory 1420 may be configured to store software programs, computer-executable programs, and modules, such as program instructions/modules (for example, the division module 1310, the first conversion module 1320, the second conversion module 1330, the third conversion module 1340, and the transmission module 1350 in the data transmission apparatus) corresponding to the device according to any embodiment of the present application. The memory 1420 may include a program storage region and a data storage region, where the program storage region may store an operating system and an application program required by at least one function, and the data storage region may store data created depending on the use of the device. Additionally, the memory 1420 may include a high-speed random-access memory and may further include a non-volatile memory such as at least one magnetic disk memory, a flash memory, or another non-volatile solid-state memory. In some examples, the memory 1420 may further include memories remotely disposed relative to the processor 1410, and these remote memories may be connected to the device via a network. Examples of the network include, but are not limited to, the Internet, an intranet, a local area network, a mobile communication network, and a combination thereof. The communication interface 1430 is used for data interaction between multiple communication devices.

The preceding communication device may be configured to execute the data transmission method of any preceding embodiment and has the corresponding functions and effects.

An embodiment of the present application provides a storage medium including computer-executable instructions which, when executed by a computer processor, cause the processor to perform a data transmission method. The method includes: dividing to-be-transmitted data into N groups of first sequences, where an n-th group of first sequences of the N groups of first sequences includes k(n) pieces of data, and k(n) is a positive integer; multiplying, for each n from 1 to N, the n-th group of first sequences of the N groups of first sequences by a corresponding coefficient group X(n) to obtain N groups of second sequences, where N is an integer greater than or equal to 2; performing inverse Fourier transform on each group of the N groups of second sequences to obtain N groups of third sequences; performing the inverse Fourier transform on the N groups of third sequences to form a group of target time domain data sequences; and transmitting the target time domain data sequences on preconfigured time-frequency resources.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

Preferred embodiments of the present application are described above, which are not intended to limit the present application. Those skilled in the art may make various modifications and variations to the present application. Any modifications, equivalent substitutions, and improvements made within the spirit and principle of the present application are within the scope of the present application.

## Claims

1. A data transmission method, comprising:
dividing to-be-transmitted data into N groups of first sequences, wherein an n-th group of first sequences of the N groups of first sequences comprises k(n) pieces of data, and k(n) is a positive integer;
multiplying, for each n from 1 to N, the n-th group of first sequences of the N groups of first sequences by a corresponding coefficient group X(n) to obtain N groups of second sequences, wherein N is an integer greater than or equal to 2;
performing inverse Fourier transform on each group of the N groups of second sequences to obtain N groups of third sequences;
performing the inverse Fourier transform on the N groups of third sequences to form a group of target time domain data sequences; and
transmitting the target time domain data sequences on preconfigured time-frequency resources.

2. The data transmission method of claim 1, before performing the inverse Fourier transform on each group of second sequences, further comprising:
performing zero-padding at two ends of each group of second sequences separately, wherein each group of second sequences after the zero-padding comprises M×s(n) pieces of data, M is a positive integer, and s(n) ≥ k(n).

3. The data transmission method of claim 2, wherein a number of points for performing the inverse Fourier transform on each group of second sequences is M×s(n).

4. The data transmission method of claim 1, wherein a channel bandwidth comprises N subbands, and each of the N subbands corresponds to a respective group of the N groups of first sequences.

5. The data transmission method of claim 1, wherein multiplying, for each n from 1 to N, the n-th group of first sequences of the N groups of first sequences by the corresponding coefficient group X(n) comprises performing frequency domain shaping on frequency domain data of the n-th group of first sequences.

6. The data transmission method of claim 1, wherein the n-th group of first sequences on different time domain symbols is multiplied by a same coefficient group X(n), wherein n = 1, 2, ..., N, and N is an integer greater than or equal to 2.

7. The data transmission method of claim 1, wherein a length of the n-th coefficient group X(n) is the same as k(n), wherein n = 1, 2, ..., N, and N is an integer greater than or equal to 2.

8. The data transmission method of claim 1, wherein first sequences with a same k(n) are multiplied by a same coefficient group X(n).

9. The data transmission method of claim 1, wherein first sequences corresponding to subbands with a same subcarrier spacing are multiplied by a same coefficient group X(n), and first sequences corresponding to subbands with different subcarrier spacings are multiplied by different coefficient groups X(n).

10. The data transmission method of claim 1, wherein the n-th coefficient group X(n) = *F*(*n*)/*f*(*n*), *F*(*n*) denotes ideal root-raised-cosine filter frequency domain coefficients at frequency domain subcarrier positions corresponding to the n-th group of first sequences, *f*(*n*) denotes actual root-raised-cosine filter frequency domain coefficients at the frequency domain subcarrier positions corresponding to the n-th group of first sequences, n = 1, 2, ..., N, and N is an integer greater than or equal to 2.

11. The data transmission method of claim 1, wherein the n-th coefficient group X(n) = 1/*f*(*n*), *f*(*n*) denotes actual root-raised-cosine filter frequency domain coefficients at frequency domain subcarrier positions corresponding to the n-th group of first sequences, n = 1, 2, ..., N, and N is an integer greater than or equal to 2.

12. The data transmission method of claim 1, wherein power normalization is performed on the n-th coefficient group X(n) such that the n-th coefficient group X(n) satisfies that mean(|*X*(*n*)|²) = 1, wherein n = 1, 2, ..., N, and N is an integer greater than or equal to 2.

13. The data transmission method of claim 1, wherein the n-th coefficient group X(n) comprises p ones at each of two ends of the n-th coefficient group X(n), n = 1, 2, ..., N, N is an integer greater than or equal to 2, and p is an integer greater than or equal to 0.

14. The data transmission method of claim 13, wherein a coefficient group *X'*(*n*), which is obtained by removing the p ones from each of the two ends of the n-th coefficient group X(n), satisfies that *X'*(*n*) = *F'*(*n*)/*f'*(*n*), *F'*(*n*) denotes ideal root-raised-cosine filter frequency domain coefficients at frequency domain subcarrier positions corresponding to the n-th group of first sequences after p subcarriers are removed from each of two ends of subcarriers corresponding to the n-th group of first sequences, *f'*(*n*) denotes actual root-raised-cosine filter frequency domain coefficients at the frequency domain subcarrier positions corresponding to the n-th group of first sequences after the p subcarriers are removed from each of the two ends of the subcarriers corresponding to the n-th group of first sequences, n = 1, 2, ..., N, and N is an integer greater than or equal to 2.

15. The data transmission method of claim 13, wherein a coefficient group *X'*(*n*), which is obtained by removing the p ones from each of the two ends of the n-th coefficient group X(n), satisfies that *X'*(*n*) *=* 1/*f'*(*n*), *f'*(*n*) denotes actual root-raised-cosine filter frequency domain coefficients at frequency domain subcarrier positions corresponding to the n-th group of first sequences after p subcarriers are removed from each of the two ends of the n-th coefficient group X(n), n = 1, 2, ..., N, and N is an integer greater than or equal to 2.

16. The data transmission method of claim 14 or 15, wherein power normalization is performed on the n-th coefficient group *X'*(*n*) such that the n-th coefficient group *X'*(*n*) satisfies that mean(|*X'*(*n*)|²) = 1, wherein n = 1, 2, ..., N, and N is an integer greater than or equal to 2.

17. The data transmission method of any one of claims 1 to 15, wherein performing the inverse Fourier transform on the N groups of third sequences to form the group of target time domain data sequences comprises:
performing frequency domain zero-padding and a cyclic shift on other P groups of initial frequency domain data sequences in sequence to obtain other P groups of target frequency domain data sequences; and
performing the inverse Fourier transform on the N groups of third sequences and the other P groups of target frequency domain data sequences to form the group of target time domain data sequences, wherein the other P groups of target frequency domain data sequences comprise data after M-fold frequency domain oversampling and are not comprised in data sequences generated from the to-be-transmitted data.

18. The data transmission method of any one of claims 1 to 15, wherein a plurality of initial time domain data sequences generated by a plurality of inverse Fourier transform operations on the N groups of third sequences are serially concatenated to form the group of target time domain data sequences, and a number of the initial time domain data sequences is equal to a number of the inverse Fourier transform operations.

19. The data transmission method of claim 18, wherein a process of generating an initial time domain data sequence by one inverse Fourier transform operation of the plurality of inverse Fourier transform operations comprises:
extracting N pieces of data from the N groups of third sequences, wherein a number of the N pieces of data is the same as a number of the N groups of first sequences; and
performing oversampled inverse Fourier transform on the N pieces of data to obtain a corresponding initial time domain data sequence, wherein each of the N pieces of data is from a respective group of the N groups of third sequences.

20. The data transmission method of claim 18, wherein a serial concatenation interval for the target time domain data sequences is 1/M of a length obtained by performing oversampled inverse Fourier transform on N pieces of target data.

21. The data transmission method of claim 18, wherein a process of generating the plurality of initial time domain data sequences by the plurality of inverse Fourier transform operations comprises:
for subbands with different subcarrier spacings, using a length of the third sequences corresponding to a subband with a minimum subcarrier spacing as a reference length; and
for third sequences corresponding to subbands with non-minimum subcarrier spacings, selecting at least two groups of third sequences, serially concatenating the at least two groups of third sequences to form a sequence with the reference length, forming new N groups of third sequences, and performing the plurality of inverse Fourier transform operations on the new N groups of third sequences to obtain the corresponding plurality of initial time domain data sequences.

22. The data transmission method of any one of claims 1 to 15, wherein each group of first sequences is transmitted in a corresponding frequency domain resource block, wherein each frequency domain resource block comprises Z subcarriers, and Z is a positive integer; and
a number of pieces of data comprised in each group of second sequences satisfies one of the following conditions: being M×s(n), or being greater than or equal to M times the number of subcarriers comprised in each frequency domain resource block.

23. A communication device, comprising a memory and at least one processor, wherein
the memory is configured to store at least one program; and
the at least one program, when executed by the at least one processor, causes the at least one processor to perform the data transmission method of any one of claims 1 to 22.

24. A storage medium storing a computer program, wherein the computer program, when executed by a processor, causes the processor to perform the data transmission method of any one of claims 1 to 22.
